# EUROPEAN PATENT SPECIFICATION

(11) **EP 1 371 067 B1**
(45) Date of publication and mention of the grant of the patent: **01.06.2005**
(21) Application number: 02705604.3
(22) Date of filing: 11.03.2002
(51) Int. Cl.: H01B 1/08, H01M 4/90, H01M 8/12, H01M 4/48

(54) **COMPOUND HAVING A HIGH CONDUCTIVITY FOR ELECTRONS; ELECTRODE FOR AN ELECTROCHEMICAL CELL WHICH COMPRISES THIS COMPOUND, METHOD FOR PREPARING AN ELECTRODE AND ELECTROCHEMICAL CELL**
HOCHLEITENDES ELEKTRON-MATERIAL, ELEKTRODE FÜR EINE ELEKTROCHEMISCHE ZELLE, VERFAHREN ZUR HERSTELLUNG DIESER ELEKTRODE UND ELEKTROCHEMISCHE ZELLE
COMPOSE DE HAUTE CONDUCTIVITE POUR ELECTRONS ; ELECTRODE DE PILE ELECTROCHIMIQUE COMPRENANT CE COMPOSE ; PROCEDE DE PREPARATION D'UNE ELECTRODE ET D'UNE PILE ELECTROCHIMIQUE

(30) Priority: 19.03.2001 NL 1017633; 12.06.2001 NL 1018267
(43) Date of publication of application: 17.12.2003
(73) Proprietor: Energieonderzoek Centrum Nederland, 1755 Le Petten (NL)
(72) Inventor: VAN HEUVELN, Frederik, Hendrik, NL-1817 KH Alkmaar (NL); PLOMP, Lambertus, NL-1814 EG ALkmaar (NL); ELZINGA, Gerard, Douwe, NL-1742 GK Schagen (NL)
(74) Representative: Barendregt, Frank, Drs.
(86) International application number: PCT/NL2002/000159
(87) International publication number: WO 2002/075749

(56) References cited:
- US-A- 4 610 867
- SHIMURA T ET AL: "Proton conduction in non-perovskite-type oxides at elevated temperatures" SOLID STATE IONICS, NORTH HOLLAND PUB. COMPANY. AMSTERDAM, NL, vol. 143, no. 1, 1 June 2001 (2001-06-01), pages 117-123, XP004245339 ISSN: 0167-2738
- MORI T ET AL: "Improvement of the electrolytic properties of Y2O3-based materials using a crystallographic index" SOLID STATE IONICS, NORTH HOLLAND PUB. COMPANY. AMSTERDAM, NL, vol. 138, no. 3-4, 1 January 2001 (2001-01-01), pages 277-291, XP004228343 ISSN: 0167-2738
- MEYER G: "Alkaline earth/rare earth halides and related systems" JOURNAL OF ALLOYS AND COMPOUNDS, ELSEVIER SEQUOIA, LAUSANNE, CH, vol. 303-304, May 2000 (2000-05), pages 409-415, XP004204396 ISSN: 0925-8388

## Description

The present invention relates to a compound having a high conductivity for electrons.

A material of this type is known from DE-C-196 40 926.

The said publication describes compounds of the type A(B₁₋ₓCₓ)O₃, where x may be 0 ≤ x < 1 and < 1; materials of this type are used to produce electrodes for an electrochemical cell. The meaning of A is a metal cation of group IIA (alkaline-earth metals) or of the lanthanides from the Periodic System or a mixture thereof; B represents a platinum metal cation, while C represents a metal cation selected from groups IVb, Vb, VIb, VIIb, VIIIb, and IIb of the Periodic System of the Elements or a mixture thereof.

The Applicant has undertaken considerable research into materials of this type and has developed a new compound which, according to the invention, is characterized in that it is of the type ABCO_{(x - δ)}Hal_{(y - ζ)} with a potassium nickel fluorite structure, where x + y = 4, and δ and ξ lie between - 0.7 and + 0.7, and wherein A comprises at least one metal selected from the group consisting of Na, K, Rb, Ca, Ba, La, Pr, Sr, Ce, Nb, Pb, Nd, Sm and Gd, and wherein B comprises at least one metal selected from the same group, and wherein C comprises at least one metal selected from the group consisting of Cu, Mg, Ti, V, Cr, Mn, Fe, Co, Nb, Mo, W and Zr and/or a metal selected from the group consisting of Pt, Ru, Ir, Rh, Pd and Ni, wherein A and B are not identical and wherein A and C are not both Nb and wherein Hal comprises at least one halogen atom selected from the group consisting of F, Cl, Br and I.

Suprisingly, it has been found that when the above type of compounds having the potassium nickel fluorite structure are used, particularly good storage capacitance (F/g or Ah/kg) and/or conversion rate or catalytic activity are obtained, the material also having a high electrical conductivity (in S/cm).

The compounds according to the invention which have been described above may also be embodied in superstructures associated with compounds of this type, obtained by repeating the unit cell, such as for example K₃Ni_{1.5}F₆ or K₄Ni₂F₈ obtained by repeating the potassium nickel fluorite unit cell K₂NiF₄.

A, B and C may each be a single metal; it is obviously also possible for A and/or B and/or C to comprise a metal which is doped with a further metal.

It is expedient for a compound according to the general formula given above to be characterized by x = 4, y = 0 and ξ = 0; in this case, the compound has the formula ABCO_{4-δ}.

In particular, in the compound according to the invention A is selected from one or more of La, Sm, Sr and Nd.

B may likewise be selected from the preferred metals listed above for A.

C is preferably selected from Co, Mn, and Fe.

In an attractive embodiment, the compound according to the invention as described above is such that A is selected from one or more of La, Sm, and Nd; B comprises Sr and wherein C comprises Co, with x = 4, y = 0 and ξ = 0.

The invention also relates to an electrode for an electrochemical cell which comprises a compound of the type described above according to the invention.

It is expedient for the quantity of compound in the electrode to be at least 30% by weight of the active, electrically conductive material associated with this electrode.

The invention also relates to a method and a general method for preparing an electrode for an electrochemical cell, comprising the steps of providing a suitable substrate and forming a continuous layer of a material with high conductivity for electrons on the substrate by applying a mixture of the corresponding material, one or more binders and at least one solvent, followed by the removal of the solvent, if appropriate followed by a heat treatment, which is characterized in that a continuous layer which comprises one or more of the compounds according to the invention as described above is formed on the substrate.

Methods for preparing electrodes are generally known, and a method of such a type is described, for example, in the abovementioned publication DE-C-196 40 926.

The substrate may, for example, be a strip of a suitable metal and/or a strip of plastic which, if appropriate, may be electrically conductive. A paste of the compound which is to be applied is made by mixing the compound with one or more binders and sufficient solvent or a mixture of solvents, so that a paste or suspension of suitable viscosity is obtained.

The paste or suspension is applied to the substrate by immersion, spreading, by brush, spraying, and the like. After drying in order to remove the solvent, the substrate coated in this way may, if appropriate also be subjected to a heat treatment in order to bring the compound to a suitable state and/or to activate the compound and/or to form a cohesive structure.

The substrate may also be a matrix, such as porous metal or a porous plastic, in which case a compound or a mixture of compounds is incorporated in the matrix and forms a cohesive unit therewith.

The compound or a mixture of a plurality of compounds may be incorporated directly in the matrix, but it is obviously also possible to use a mixture which comprises the compound or compounds, one or more binders and one or more solvents, so that the suspension obtained therefrom is in a form which can readily be incorporated in the matrix.

On the other hand, the substrate may have a release property, so that the layer which comprises a compound having a high conductivity for electrons according to the invention, after it has been applied, is removed from the substrate and subjected to an optional heat treatment.

The invention also relates to an electrochemical cell having at least two electrodes and an electrolyte, which is characterized in that this electrochemical cell comprises at least one electrode according to the present invention.

Both electrodes may be an electrode according to the invention; it is also possible for there to be, in addition to an electrode according to the invention, a further electrode which is selected from a carbon electrode, an RuO₂ electrode and an RuO₂.xH₂O electrode.

In the present context, the term electrode for electrochemical cell is understood in the broadest sense to mean the use of an electrode in combination with an electrolyte and other electrodes, i.e. the invention relates to an electrode for the electrochemical conversion and storage of electricity as encountered in electrochemical capacitors, also known as supercapacitors or ultracapacitors, storage batteries, in particular including rechargeable batteries of the alkaline type or the metal/air type, fuel cells, such as the polymer electrolyte fuel cell, electrolysis equipment and sensors.

An electrochemical capacitor (or supercapacitor or ultracapacitor) is a device in which electricity can be stored and from which the electricity can then be taken again, in particular with a high power density (W/kg and W/l) , by making use of electrical double-layer capacitance and/or what is known as pseudo-capacitance, which is linked to Faraday processes, such as redox reactions or intercalation processes. Applications include, inter alia, the (brief) storage and/or delivery of peak powers and the reduction of duty cycles in batteries, as required, inter alia, in battery or hybrid or fuel cell vehicles, in installations or equipment which ensure the quality of central or local electricity networks or power supplies, and in optionally portable electronic equipment, such as laptops and mobile telephones. An electrochemical capacitor of this type has two electrodes, an anode and a cathode, at which electrons are respectively released and taken up. Furthermore, the capacitor includes an electrolyte, for example an aqueous or organic solution, and a separator, and the assembly may be accommodated in a metal or plastic housing. At least one of the two electrodes may be an electrode according to the invention. The charge, which is positive at one electrode and negative at the other, is stored in the electrical double-layer capacitance at the electrode/electrolyte interface, in the pseudo-capacitance resulting from highly reversible redox reactions or intercalation processes at this interface or in the bulk of the electrode material, or in a combination of double-layer capacitance and pseudo-capacitance. Important properties in this respect are the specific capacitance (in µF/cm²), which is determined by the nature of the electrode material and the electrolyte used, the specific surface area of the electrode material (in cm²/g), and the resulting effective capacitance in (F/g). Furthermore, the type of electrolyte is of importance for the permissible potentials at the electrodes. These determine, in the case of pseudo-capacitance together with the effective potential range around the Nernst equilibrium potentials of the related reactions or processes, the operational voltage range of the capacitor, which should preferably be as great as possible. The composition and microstructure of the electrode materials, the microstructure of the separator and the composition of the electrolyte partly, but not solely, determine the internal resistance Rᵢ (in Ω) of the capacitor, which should preferably be as low as possible. The parameters described partly, but not solely, determine the energy density of the capacitor (in Wh/kg) and (Wh/l) and the power density (in W/kg and W/1). For known technology, these are typically a few Wh/kg and a few thousand W/kg, respectively. For the energy E (in J) and the power P (in W) of the capacitor with capacitance C (in F) and charged to the voltage V (in V), the following equations respectively apply: E = CV²/2 and P = V²/4Rᵢ.

Inter alia, electrochemical capacitors with electrodes which have activated carbon as the most important constituent and which predominantly use electrical double-layer capacitance are known. It is important that the activated carbon forms a porous structure with a high specific surface which is accessible to the electrolyte, in order to form a capacitance which is as high as possible, and with a conductivity for electrons which is as high as possible, in order to produce a resistance which is as low as possible and to utilize as much electrode material as possible. The highest energy and power densities are obtained in this way, which is a requirement for most applications. Carbon electrodes which predominantly use double-layer capacitance can be used as anodes and as cathodes; in this way, it is possible to make symmetrical capacitors. Carbon electrodes can be used in combination with an aqueous electrolyte, the permissible capacitor voltage being at most approx. 1.2 V and a low internal resistance being obtained, or in combination with an organic electrolyte, in which case. the maximum voltage is approx. 2.4 V but the internal resistance which can be obtained is generally lower.

For many applications, but in particular for use in vehicles, a higher energy density than that which is known in the prior art when using carbon electrodes is desirable. Particularly when attempting to achieve a higher energy density, the use of pseudo-capacitance is useful, since in this case generally much higher specific values are achieved than with double-layer capacitance. It is known to use ruthenium oxide RuO₂ and hydrated ruthenium oxide RuO₂.xH₂O, inter alia from US patents 5,550,706, 5,851,506, 5,875,092 and 6,025,020. In combination with aqueous electrolytes, such as for example KOH solutions, these compounds have a high effective capacitance in F/g based on redox reactions and can be used as anode and cathode. They also have a good electrical conductivity. Drawbacks of the compounds when used in (symmetrical) electrochemical capacitors are the limited operational voltage range and the very high costs of material of the desired purity. Considerable research is being undertaken into alternative pseudo-capacitance materials which are able to counteract these drawbacks while still allowing the desired higher capacitance and energy density to be achieved.

In the prior art, it is generally accepted that the use of compounds containing precious-metal elements, such as for example precious-metal oxides, is necessary in order to obtain a sufficiently high storage capacitance and/or a sufficiently high conversion rate or catalytic activity of the electrode, and a sufficiently high electrical conductivity.

However, it will be understood that the costs of such compounds are high. Therefore, it has been proposed to reduce the quantity of precious metal in such compounds by using compositions which partially comprise inexpensive, non-precious metals. Compounds having the pyrochlore structure, such as Pb₂Ru₂O₇ (US patent 5,841,627), perovskites A(B₁₋ₓCₓ)O₃ where 0 ≤ x < 1 and B is selected from the series consisting of Pt, Ru, Ir, Rh and Pd (German patent DE 196 40 926), CaRuO₃₋ₓ and LaNiO₃, etc., are known. These compounds contain the expensive (semi-) precious-metal elements or are not oxygen-deficient (or both). For the first category, it has been found that, calculated on the basis of the capacitance or activity obtained for the quantity of (semi-)precious metal, scarcely any reduction in cost is achieved. For the second category, the capacitance or activity obtained per gram is so low that there is no improvement compared to carbon materials.

Furthermore, it has been proposed to use metal hydroxides, which may change into metal oxyhydroxides, such as in particular Ni(OH)₂. Although this compound is attractive in view of its low cost, its high specific capacitance and its favourable potential range, its conductivity is low and is dependent on the charge state. The reversible charge/discharge reaction at an electrode of this material in an alkaline electrolyte can be represented by Ni(OH)₂ + OH⁻ ⇔ NiOOH + H₂O + e, in which Ni (OH)₂ has a poor conductivity and NiOOH has a significant electrical conductivity, provided it is in the correct phase (the β phase).

These restrictions in terms of the electrical conductivity require the use of additives, such as for example graphite, and the use of conductive matrices, such as for example foamed metals or metal mats, in order to enclose the material with additive. This restricts the electrode thickness which can be utilized effectively and entails additional costs, weight and volume. This also makes the production of electrodes more complicated and more expensive. The occurrence of Ni (OH)₂ in a plurality of phases (α, β, γ) limits the acceptable operational conditions for the electrode to the conditions in which the desired β phase is stable. Furthermore, an Ni(OH)₂ electrode can only be used as an anode, and consequently it is impossible to make symmetrical capacitors and, by way of example, a carbon counterelectrode is required. This limits the improvements in capacitance and energy density which can be achieved compared to the symmetrical carbon capacitor. Ni (OH)₂, and in particular the nickel constituent and, if appropriate, the nickel required for the preparation, are also believed to have disadvantageous properties for the environment and health. Consequently, requirements and regulations apply with regard to its treatment and processing, which entail additional costs. These also impose limitations on its application areas, for example to the applications and markets for which collection and/or reuse are regulated.

A (rechargeable) battery is a known item of equipment. It can be used to store electricity and then to release it again, in particular with a high energy density (in Wh/kg and Wh/1), by using electrochemical conversion of electrical energy into chemical energy and vice versa. The structure of batteries of this type corresponds to the structure of electrochemical capacitors described above, although their design and operation may differ. Inter alia, (rechargeable) batteries of the nickelcadmium, nickel-zinc and nickel-iron type, of the nickel-hydrogen type, of the nickel-metal hydride type, and of the metal/air type, such as iron/air, zinc/air, aluminium/air and lithium/air, are known. At least one of the two electrodes of batteries of this type can now profitably be replaced by an electrode according to the invention. In particular, but not exclusively, the nickel electrodes, the cadmium electrode and the air electrodes are suitable for this purpose.

Inter alia, (rechargeable) batteries of the NiCd, NiZn, NiFe, NiH₂ and NiMH type are known, in which the "nickel electrode" consists of the same Ni(OH)₂ compound and has the same action as that described above for electrochemical capacitors. In this case, the same drawbacks in terms of the restrictions in electrical conductivity and the same problems with regard to the environment and health apply.

Batteries of the Fe/air, Zn/air, Al/air and Li/air types are also known, in which during the discharge oxygen is consumed at the air electrode by electrochemical reduction; batteries of this type are "mechanically recharged" by renewal of the anode. Bidirectional air electrodes which, as well as reducing oxygen, are also able to evolve oxygen in the reverse process and therefore allow electrically rechargeable metal/air batteries, are also known. The compounds which have been described above only enable moderate performance to be achieved, on account of limited conductivity and catalytic activity, and are often expensive.

It is an object of the present invention to provide an electrode of high performance which does not have the above drawbacks, i.e. is inexpensive to produce and does not have any environmental or health drawbacks.

The set object is achieved, as indicated, by the compounds according to the invention having the formula ABCO_{(x - δ)}Hal_{(y - ξ)} having the potassium nickel fluorite structure as indicated above. A, B and C may be simple metals; however, A, B and/or C may also be metals which are doped with another metal.

Therefore, the compounds of the type ABCO_{(x - δ)}H_{(y - ξ)} as described above are also understood as meaning compounds of the type A1A2B1B2C1C2O_{(x - δ)}H_{(y - ξ)}, with x + y = 4, and δ and ξ between - 0.7 and + 0.7 and with the A, B and C each being selected from the groups described above. In particular, they also include the compounds A1A2B1B2C1C2O_{(4 - δ)} and compounds from subclasses, such as ASrCoO_{(4 - δ)} and the gallates ABGaO_{(4 - δ)}. Examples include SmSrCoO_{(4 - δ)} LaSrCoO_{(4 - δ)} NdSrCoO_{(4 - δ)} and LaSrGaO_{(4 - δ)}, but the invention is not limited to these examples. The invention also covers the superstructures associated with the said compounds, obtained by repeating the unit cell (such as for example K₃Ni_{1.5}F₆ or K₄Ni₂F₈ are obtained by repeating the potassium nickel fluorite unit cell K₂NiF₄).

Obviously, an electrode according to the invention may comprise more than one of the corresponding compounds.

The use of these compounds makes it possible to obtain electrodes with desired properties at low materials costs and using a simple manufacturing process. Furthermore, the invention makes it possible to produce the electrodes without additions of extra materials or components being required, for example for electrical conductivity or current withdrawal. Preferably, electrodes of this type have a considerable porosity, in order to increase the active surface area with the electrolyte. Preferably, an electrode of this type, at least in the vicinity of the surface, comprises a porous structure which comprises at least 30%, and preferably more than 70%, of one or more of the abovementioned compounds. Surprisingly, in an electrochemical capacitor, it has been found that electrodes of this type have a high pseudo-capacitance. By way of example, when used as an anode in an asymmetric electrochemical capacitor with a carbon cathode and with KOH electrolyte, a high electrode capacitance was found, which, in view of the effective surface area, cannot be ascribed to double-layer capacitance. A high capacitance of the total cell was also found, with a low internal resistance, a favourable Nernst equilibrium potential E₀ and an appropriately useful voltage range. This leads to high energy and power densities for the cell. Separate measurements revealed high electrical conductivities for electrodes comprising compounds according to the invention. A comparison with the properties of electrodes which are known from the prior art is given in Table 1. In particular, the electrical conductivity is of the same high level as that of Pb₂Ru₂O₇, and the capacitance in µF/cm² is of the same high level as that of Ni(OH)₂. As well as the expensive ruthenium, it is also possible, with an electrode according to the invention, although not necessary, to avoid the heavy metal lead.

**Table 1.**

| Comparison of properties between electrodes*)according to the prior art and an SmSrCoO_{4-δ} electrode*) according to the invention. C is the capacitance; Ω is the electrical conductivity, A is the effective surface area. Maximum voltage V and maximum voltage drop ΔV apply to the entire cell. | | | | | | |
|---|---|---|---|---|---|---|
| Property | Activated carbon | RuO₂.xH₂O | Pb₂Ru₂O₇ | SrRuO₃ | Ni (OH)₂ | SmSrCoO_{4-δ} |
| C (µF/cm²) | 10 ... 40 | .. | .. | 60 | 2200 | 2500 |
| A (m²/g) | < 1200 | 120 | 10 ... 150 | 70 | 100 | 1.2⁽⁰⁾ |
| C (F/g) | < 100 | < 720 | 72 | 20..200 | 2200 | > 30 ⁽⁰⁾ |
| σ (S/cm) | < 1 | .. | 500 | .. | .. | >500 |
| V (V) | 1.2 2 | 1.3 3 | .. | 1.2 | 1.6 | 1.6 |
| Δ V (V) | 1.0 | 1.0 | 0.9 | 0.7 | 0.8 | 1.2 |
| | | | | | | |
| K (Euro/kg) | 2.25⁽¹⁾ | 3000⁽²⁾ 5000⁽³⁾ | 1000⁽²⁾ 23.000⁽⁴⁾ | >3000⁽²⁾ | 6...10⁽⁵⁾ | 20 ⁽²⁾... 1200⁽⁶⁾ |

| | | | | | | |
|---|---|---|---|---|---|---|
| *) as working electrode in a supercapacitor with carbon counterelectrode and KOH electrolyte. | | | | | | |
| (0) > 2500 F/g at > 100 m²/g | | | | | | |
| (1) purchase price based on 1000 kg | | | | | | |
| (2) raw material price | | | | | | |
| (3) purchase price based on 25 kg and depending on purity | | | | | | |
| (4) chemically pure and based on 5 grams | | | | | | |
| (5) based on NiO raw material price for > 1000 kg | | | | | | |
| (6) purchase price for one-off batch of 1 kg | | | | | | |

In addition to one or more the abovementioned compounds according to the invention, the electrodes may also, though not necessarily, contain a binder for the purpose of forming a cohesive structure. A structure of this type may, but does not have to, be arranged in a matrix. It is also possible, although not necessary, for the electrodes to have undergone a heat treatment or calcining treatment or a sintering treatment.

On account of the high electrical conductivity, it is possible to utilize electrodes according to the invention with greater thicknesses without using additives, such as for example graphite, or conductive matrices, such as for example metal foams. This makes it possible to use cells and stacks of cells with less inactive material and therefore a higher energy and power density. On account of the high conductivity, it is also possible to use a matrix of lower conductivity than, for example, a metal foam, for example a matrix of a conductive plastic or a conductive polymer, which also allows the weight and costs to be reduced. It is also possible to form independent, relatively thick electrode layers, for example by printing, casting or dipping, optionally on other (electrical or electronic) components, which have a high capacitance and do not use expensive precious-metal elements.

None of this detracts from the fact that electrodes according to the invention can also be made as thin films, for example by printing, casting, dipping, painting or spraying, and can be used in this form.

In terms of the design and use, the electrodes according to the invention are not restricted to asymmetric capacitors or to capacitors with the structure indicated; they can also be put to good use in symmetrical electrochemical capacitors, in batteries and in fuel cells, reversible fuel cells, electrolysis equipment and sensors. By way of example, an electrode comprising one or more compounds according to the invention may replace the known Ni(OH)₂ electrode in an alkaline battery, for example an NiCd or NiMH battery. For this purpose, the composition of the electrode according to the invention is then selected in such a way that the capacitance lies within the potential range which is desired for the battery.

An electrode according to the invention is characterized by a specific composition and oxygen stoichiometry δ, by a high pseudo-capacitance (of the same level as for Ni(OH)₂) and/or a high catalytic activity and/or a high conversion rate, by a high electrical conductivity (of the same level as Pb₂Ru₂O₇) virtually irrespective of the charge state or polarization, by a high stability, on account of the absence of undesired phases, and by a useful voltage range. In an electrode according to the invention, it is also possible to avoid the use of environmentally harmful elements, such as nickel and lead, which occur in electrodes according to the prior art. In addition, the use of expensive precious metals can be avoided. On account of the abovementioned properties, an electrode according to the invention, compared to those which are known in the prior art, can be less expensive, can have a higher round-trip efficiency, in particular at relatively high current intensities, can be produced more easily, can be used in the form of a thin film or a thick layer, and may optionally be enclosed in a matrix which may also comprise a lightweight, inexpensive plastic material of moderate conductivity. In this way, an electrode according to the invention also permits designs other than those which are known in the prior art for capacitors, supercapacitors, batteries, fuel cells, electrolysers and sensors. For example, it is now possible for the electrode to be printed as a layer onto another component and, in this way, to add a function to this component. This component may, for example, form part of a photovoltaic solar cell or of an electrochromic window.

The present invention will be explained in more detail below with reference to a number of examples.

### Example 1

Electrode according to the invention produced by the application of a layer of suspension, ink or paste to a substrate. The substrate may, for example, be a metal foil or a plastic film. The suspension, ink or paste comprises one or more compounds according to the invention, a solvent, and possibly auxiliaries, such as dispersing agents, surfactants, wetting agents and the like. The compounds according to the invention may in this case be added in the form of a powder with a high specific surface area. The suspension, ink or paste may if appropriate also contain a binder. The application is effected by means of lubricating, painting, spraying, dipping, printing, casting, slip casting or rolling. After its application, the layer may firstly be dried, during which process solvent and auxiliaries are completely or partially removed. If appropriate, it is possible to use a heat treatment, calcining or sintering after the drying or as substitute for the drying. Then, the substrate bearing the layer, which may have characteristic thicknesses of between approx. 2 µm and approx. 1 000 µm and which may have a porosity of between approx. 5% and approx. 40%, is used in a supercapacitor or battery.

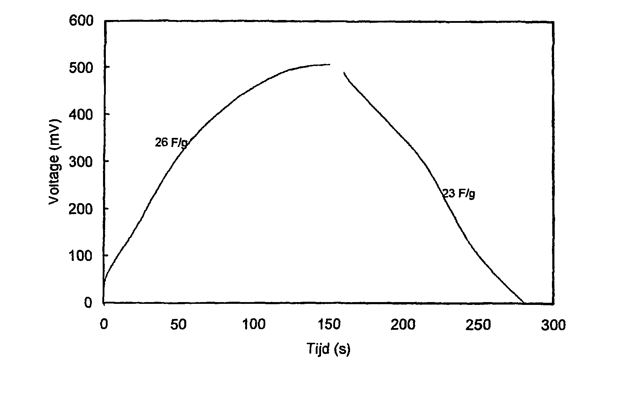

In this way, by way of example, a 1 cm² electrode according to the invention is made as follows. A quantity of SmSrCoO_{4-δ} powder (δ = 0.25 ± 0.05) with a low specific surface area of ≤ 1.2 m²/g was introduced into a solution comprising 4 M KOH electrolyte and 0.1% by weight of surfactant. Agitation for 24 hours resulted in a homogeneous suspension, some of which was then applied to a 50 µm thick nickel foil (the current collector). All this was then dried for 4 hours at 80°C, in order in this way to obtain a 1 cm² electrode/current collector laminate, with an electrode layer which was approximately 30 µm thick. Together with a separator and a counterelectrode made from activated carbon, this laminate was arranged in a Teflon® cell housing. Both electrodes were provided with electrolyte, after which the cell housing was sealed. Two stainless steel pins provide contact between the current collectors and the outside of the cell. The internal resistance ESR of the supercapacitor obtained in this way was measured with the aid of impedance spectroscopy. Then, charging and discharging cycles were carried out, cyclic voltammograms were recorded and charging and discharging cycles were carried out again at current densities of up to 100 mA per gram of SmSrCoO_{4-δ} and between the cell voltages of 0 and 1.8 V. Figure 1 shows the results for a cell in which a platinum reference electrode was also fitted in the separator. The potential curve of the electrode during charging and discharging with a current of 0.1 A/g leads to an effective capacitance for the compound according to the invention of approx. 30 F/g.

### Example 2

Electrode produced by the application of a suspension, ink or paste in a matrix. The matrix may be a metal foam or a metal mat, metal gauze, polymer foam, polymer gauze or some other porous structure. The suspension, ink or paste comprises one or more compounds according to the invention, and may furthermore contain constituents as described in Example 1. The compounds according to the invention may in this case be added in the form of a powder with a high specific surface area. The suspension, ink or paste may be applied using the methods described in Example 1. After the application, the steps as described in Example 1 may follow. Typical thicknesses of the electrode structure which is formed will lie between approx. 100 µm and approx. 1500 µm.

### Example 3

Electrode produced by the application of a layer of suspension, ink or paste to a substrate. The suspension, ink or paste comprises one or more compounds according the invention, a solvent and possibly auxiliaries, such as dispersing agents, surfactants, wetting agents and the like. The compounds according to the invention may in this case be added in the form of a powder with a high specific surface area. If appropriate, the suspension, ink or paste may also contain a binder. The substrate is a smooth surface. The suspension is distributed over the surface by lubricating, painting, printing or casting and is dried. Then, the tape which is formed is removed from the smooth surface as an independent electrode layer. If appropriate, for use in a capacitor, battery, fuel cell, electrolyser or sensor, it is also possible for heat treatments, calcining steps or sintering steps to be applied to the tape.

### Example 4

Electrode produced by the application of a suspension, ink or paste comprising one or more compounds according to the invention to a substrate or in a matrix, this substrate or matrix forming part or being intended to form part of another component or device, such as a photovoltaic solar cell or electrochromic window.

### Example 5

One or more compounds according to the invention are packaged in powder form in an envelope of porous plastic material, which is inert with respect to the electrolyte which is to be used and is electrically insulating. To close the envelope, powder material, envelope and a wire or strip of metal are pressed together in such a manner that there is contact between the powder particles themselves and between the wire or strip and the powder. The structure formed in this way is used as an electrode in an electrochemical cell.

The characterizing use of the compounds having the potassium nickel fluorite structure in the electrodes according to the invention means that, compared to the known materials and electrodes, there are numerous possible ways of influencing the properties and adapting them to specific use requirements.

Although the invention has been described above with reference to preferred embodiments, it will be understood that, on reading the above description, variants which are obvious and lie within the scope of the appended claims will occur to the person who is skilled in the relevant art.

## Claims

1. Compound having a high conductivity for electrons, **characterized in that** it is of the type ABCO_{(x - δ)}Hal_{(y - ζ)} with a potassium nickel fluorite structure, where x + y = 4, and δ and ξ lie between - 0.7 and + 0.7, and wherein A comprises at least one metal selected from the group consisting of Na, K, Rb, Ca, Ba, La, Pr, Sr, Ce, Nb, Pb, Nd, Sm and Gd, and wherein B comprises at least one metal selected from the same group, and wherein C comprises at least one metal selected from the group consisting of Cu, Mg, Ti, V, Cr, Mn, Fe, Co, Nb, Mo, W and Zr and/or a metal selected from the group consisting of Pt, Ru, Ir, Rh, Pd and Ni, wherein A and B are not identical and wherein A and C are not both Nb and wherein Hal comprises at least one halogen atom selected from the group consisting of F, Cl, Br and I.

2. Compound according to claim 1, in the form of an associated superstructure obtained by repeating the unit cell.

3. Compound according to claim 1 - 2, wherein A and/or B and/or C comprises a metal doped with a further metal.

4. Compound according to one of the preceding claims, in which x = 4, y = 0 and ξ = 0.

5. Compound according to one or more of claims 1-4, wherein A is selected from one or more of La, Sm, Sr and Nd.

6. Compound according to one or more of claims 1-5, wherein B is selected from one or more of La, Sm, Sr and Nd.

7. Compound according to one or more of claims 1-6, wherein C is selected from one or more of Co, Mn and Fe.

8. Compound according to claim 1 or 2, wherein A is selected from one or more of La, Sm and Nd, and wherein B comprises Sr, and wherein C comprises Co, and where x = 4, y = 0, and ξ = 0.

9. Electrode for an electrochemical cell which comprises a compound according to one or more of claims 1-8.

10. Electrode according to claim 9, in which the compound forms at least 30% by weight.

11. Method for preparing an electrode for an electrochemical cell, comprising the steps of providing a suitable substrate and forming a continuous layer of a material with high conductivity for electrons on the substrate by applying a mixture of the corresponding material, one or more binders and at least one solvent, followed by the removal of the solvent, if appropriate followed by a heat treatment, **characterized in that** a continuous layer which comprises one or more of the compounds according to claims 1-8 is formed on the substrate.

12. Method according to claim 11, **characterized in that** the substrate is a matrix and the compound or a mixture of compounds is held inside the matrix, forming a cohesive unit therewith.

13. Method according to claim 11, **characterized in that** the substrate has a release property, and the layer which comprises a compound with a high conductivity for electrons, after it has been applied, is removed from the substrate and subjected to an optional heat treatment.

14. Electrochemical cell having at least two electrodes and an electrolyte, **characterized in that** it comprises at least one electrode according to claim 9 or 10.

15. Electrochemical cell according to claim 14, **characterized in that** it comprises a further electrode selected from a carbon electrode, an RuO₂ electrode and RuO₂.xH₂O electrode.

## Patentansprüche

1. Verbindung mit einer hohen Elektronenleitfähigkeit, **dadurch gekennzeichnet, dass** es von dem ABCO_{(x - δ)} Hal_{(y - ζ)} Typ ist, mit einer Kaliumnickelfluoritstruktur, wobei x + y = 4, und δ + ξ zwischen - 0,7 und + 0,7 liegen, und wobei A wenigstens ein Metall umfasst, gewählt aus der Gruppe bestehend aus Na, K, Rb, Ca, Ba, La, Pr, Sr, Ce, Nb, Pb, Nd, Sm und Gd, und wobei B wenigstens ein Metall umfasst, gewählt aus der gleichen Gruppe, und wobei C wenigstens ein Metall umfasst, gewählt aus der Gruppe bestehend aus Cu, Mg, Ti, V, Cr, Mn, Fe, Co, Nb, Mo, W und Zr und/oder einem Metall gewählt aus der Gruppe bestehend aus Pt, Ru, Ir, Rh, Pd und Ni, wobei A und B nicht identisch sind und wobei A und C nicht beide Nb sind und wobei Hal wenigstens ein Halogenatom umfasst, gewählt aus der Gruppe bestehend aus F, Cl, Br und I.

2. Verbindung nach Anspruch 1, in der Form einer begleitenden Überstruktur (associated superstructure), erhalten durch Wiederholen der Einheitszelle.

3. Verbindung nach Anspruch 1 - 2, wobei A und/oder B und/oder C ein Metall umfasst, welches mit einem weiteren Metall dotiert ist.

4. Verbindung nach einem der vorangehenden Ansprüche, wobei x = 4, y = 0 und ξ = 0.

5. Verbindung nach einem oder mehreren der Ansprüche 1 - 4, wobei A aus einem oder mehreren aus La, Sm, Sr und Nd gewählt ist.

6. Verbindung nach einem oder mehreren der Ansprüche 1 - 5, wobei B aus einem oder mehreren aus La, Sm, Sr und Nd gewählt ist.

7. Verbindung nach einem oder mehreren der Ansprüche 1 - 6, wobei C aus einem oder mehreren aus Co, Mn und Fe gewählt ist.

8. Verbindung nach Anspruch 1 oder 2, wobei A aus einem oder mehreren aus La, Sm und Nd gewählt ist, und wobei B Sr umfasst, und wobei C Co umfasst, und wobei x = 4, y = 0 und ξ = 0.

9. Elektrode für eine elektrochemische Zelle, welche eine Verbindung gemäß einem oder mehreren der Ansprüche 1 - 8 umfasst.

10. Elektrode nach Anspruch 9, wobei die Verbindung wenigstens 30 Gew.-% bildet.

11. Verfahren zur Herstellung einer Elektrode für eine elektrochemische Zelle, umfassend die Schritte des Bereitstellens eines geeigneten Substrats und das Ausbilden einer kontinuierlichen Schicht aus einem Material mit einer hohen Elektronenleitfähigkeit auf dem Substrat, indem eine Mischung aus einem entsprechenden Material, einem oder mehreren Bindemitteln und wenigstens einem Lösungsmittel aufgebracht wird, gefolgt von dem Entfernen des Lösungsmittels, wenn geeignet gefolgt von einer Wärmebehandlung, **dadurch gekennzeichnet, dass** eine kontinuierliche Schicht auf dem Substrat gebildet wird, welche eine oder mehrere der Verbindungen gemäß der Ansprüche 1 - 8 umfasst.

12. Verfahren nach Anspruch 11, **dadurch gekennzeichnet, dass** das Substrat eine Matrix ist und die Verbindung oder eine Mischung der Verbindungen innerhalb der Matrix gehalten wird, und eine kohäsive bzw. zusammenhängende Einheit mit dieser bildet.

13. Verfahren nach Anspruch 11, **dadurch gekennzeichnet, dass** das Substrat eine Abgabe- bzw. Freigabeeigenschaft aufweist, und dass die Schicht, welche eine Verbindung mit einer hohen Elektronenleitfähigkeit umfasst, nachdem sie aufgebracht wurde, von dem Substrat entfernt wird und einer optionalen Wärmebehandlung unterworfen wird.

14. Elektrochemische Zelle mit wenigstens zwei Elektroden und einem Elektrolyt,
**dadurch gekennzeichnet, dass** sie wenigstens eine Elektrode gemäß Anspruch 9 oder 10 umfasst.

15. Elektrochemische Zelle nach Anspruch 14, **dadurch gekennzeichnet, dass** sie eine weitere Elektrode umfasst, gewählt aus einer Kohlenstoffelektrode, einer RuO₂-Elektrode und RuO₂•xH₂O-Elektrode.

## Revendications

1. Composé possédant une conductivité élevée pour les électrons **caractérisé en ce qu'**il est du type ABCO_{(x - δ)}Hal_{(y - ξ)} avec une structure de type fluorite de nickel-potassium,
dans lequel
- x + y = 4,
- δ et ξ sont compris entre -0,7 et +0,7,
- A comprend au moins un métal choisi dans le groupe consistant en Na, K, Rb, Ca, Ba, La, Pr, Sr, Ce, Nb, Pd, Nd, Sm et Gd,
- B comprend au moins un métal choisi dans le même groupe,
- C comprend au moins un métal choisi dans le groupe consistant en Cu, Mg, Ti,V, Cr, Mn, Fe, Co, Nb, Mo, W et Zr et/ou un métal choisi dans le groupe consistant en Pt, Ru, Ir, Rh, Pd et Ni,
et dans lequel A et B ne sont pas identiques, A et C ne sont pas tous les deux Nb et Hal comprend au moins un atome d'halogène choisi dans le groupe consistant en F, Cl, Br et I.

2. Composé selon la revendication 1, sous la forme d'une superstructure associée obtenue par répétition d'un élément unitaire.

3. Composé selon les revendications 1 et 2, dans lequel A et/ou B et/ou C comprend un métal dopé par un autre métal.

4. Composé selon l'une des revendications précédentes, dans lequel x = 4, y = 0 et ξ = 0.

5. Composé selon l'une ou plusieurs des revendications 1 à 4, dans lequel A est choisi parmi un ou plusieurs des éléments La, Sm, Sr et Nd.

6. Composé selon l'une ou plusieurs des revendications 1 à 5, dans lequel B est choisi parmi un ou plusieurs des éléments La, Sm, Sr et Nd.

7. Composé selon l'une ou plusieurs des revendications 1 à 6, dans lequel C est choisi parmi un ou plusieurs des éléments Co, Mn et Fe.

8. Composé selon la revendication 1 ou 2, dans lequel A est choisi parmi un ou plusieurs des éléments La, Sm et Nd, et dans lequel B comprend Sr, et dans lequel C comprend Co, et où x = 4, y = 0, et ξ = 0.

9. Electrode pour élément électrochimique qui comprend un composé selon l'une ou plusieurs des revendications 1 à 8.

10. Electrode selon la revendication 9, dans laquelle le composé représente au moins 30 % en poids.

11. Méthode pour la préparation d'une électrode pour un élément électrochimique comprenant les étapes de fourniture d'un substrat approprié et de formation d'une couche continue d'un matériau à haute conductivité pour les électrons par application sur le substrat d'un mélange du matériau correspondant, d'un ou plusieurs liants et d'au moins un solvant, suivi de l'élimination du solvant, et le cas échéant suivi d'un traitement thermique, **caractérisée en ce qu'**une couche continue qui comprend un ou plusieurs des composés selon les revendications 1 à 8 est formée sur le substrat.

12. Méthode selon la revendication 11, **caractérisée en ce que** le substrat est une matrice et **en ce que** le composé ou un mélange de composés est maintenu à l'intérieur de la matrice, en formant avec celle-ci une unité cohérente.

13. Méthode selon la revendication 11, **caractérisée en ce que** le substrat possède une propriété de libération et **en ce que** la couche, qui comprend un composé à haute conductivité électronique, est, après avoir été appliquée, retirée du substrat et éventuellement soumise à un traitement thermique.

14. Elément électronique possédant au moins deux électrodes et un électrolyte, **caractérisé en ce qu'**il comprend au moins une électrode selon la revendication 9 ou 10.

15. Elément électronique selon la revendication 14, **caractérisé en ce qu'**il comprend une électrode supplémentaire choisie dans le groupe comprenant les électrodes de carbone, électrodes de RuO₂ et électrodes de RuO₂.xH₂O.
